# EUROPEAN PATENT SPECIFICATION

(11) **EP 3 685 675 B1**
(45) Date of publication and mention of the grant of the patent: **18.01.2023**
(21) Application number: 19153853.7
(22) Date of filing: 26.01.2019
(51) Int. Cl.: A23G 1/18, A23G 1/00, A23G 3/34, A23G 3/02

(54) **PROCESS, APPARATUS AND COMPUTER PROGRAM FOR TEMPERING OF CHOCOLATE MASS**
VERFAHREN, VORRICHTUNG UND COMPUTERPROGRAMM ZUM TEMPERIEREN VON SCHOKOLADENMASSE
PROCÉDÉ, APPAREIL ET PROGRAMME INFORMATIQUE POUR LE TEMPÉRAGE D'UNE MASSE DE CHOCOLAT

(43) Date of publication of application: 29.07.2020
(73) Proprietor: Aasted ApS, 3520 Farum (DK)
(72) Inventor: Holmud, Dennis, 2860 Søborg (DK); Burmeister, Martin, 3520 Farum (DK)
(74) Representative: Heiden, Finn

(56) References cited:
- EP-A1- 2 941 960
- US-A- 6 105 489

## Description

The present invention concerns a process for controlling continuous tempering of a fat-containing, crystallizable mass, such as chocolate mass, nougat mass or creme mass being pumped continuously through a pre-cooling stage in which it is cooled to a mass pre-cooling temperature above the crystal-creation temperature of the particular mass, where after the mass is pumped through a crystallization cooling stage in which the mass is cooled so that crystals are created in the mass thereby having a mass outlet temperature, entering a set-point value for the mass outlet temperature at the touch-screen of a HMI-unit, and adjusting the crystallization amount to be achieved.

The invention also relates to an apparatus for continuous tempering of a fat-containing, crystallizable mass, such as chocolate mass, nougat mass or creme mass having a HMI-unit with a computer adapted to execute the steps of the process of the invention.

Furthermore the invention relates to a computer program comprising instructions to cause the HMI-unit of the apparatus to execute the steps of the inventive process.

EP3269250A1 discloses a process and an apparatus of the introductory art by which the undesirable lower melting crystals are not present in the crystallized chocolate mass wherefore the traditionally applied extra reheating of the mass is superfluous and consequently not present. The present inventive process and apparatus excludes a final reheating stage as well.

EP3085241A1 further discloses the same apparatus as in EP3269250A1 by which the pre-cooling stage is performed by a plate-heat exchanger which in combination with the crystallization stage ensures that the pre-cooled tempered chocolate mass only has a content of desirable, stable Beta 5 crystals so that a reheating stage can be omitted. However, other heat exchanger constructions that obtain the same desirable combination of pre-cooling and crystallization stage are part of the inventive idea as well.

At the process and apparatus of EP3269250A and of EP3085241A1 the stages of pre-cooling and of crystallization are controlled separately. The settings of chocolate temperatures and water temperatures of the two stages are done individually as well. This has to be done by personnel who are highly skilled and educated in chocolate tempering.

EP2941960A1 discloses a process as in the introductory part of the present application. Furthermore, only 1/3 of the cooled chocolate mass is crystallised and the remaining 2/3 of the cooled mass is by-passed keeping it free from crystals and maintained at a constant temperature. The crystallised mass amount and the by-passed mass amount are mixed together and tempered to the outlet temperature.

Before production begins, the desired mass outlet temperature is entered at a touch-screen. A computer control unit (CPU) calculates the required by-pass temperature and crystallization temperature from an equation and regulates the necessary cooling amounts of the different stages, so that the chocolate temperatures are reached after 5-10 minutes and the chocolate is ready for production.

The tempering index can thereafter be adjusted on a scale of the touch-screen for optimizing the crystallization amount of the chocolate mass to the particular production process. The CPU directly affects the water temperature regulating means of the cooling circuit of the crystallization stage for a lower water temperature and simultaneously affects the pump of the by-pass for a higher flow of chocolate for increasing the index, or vice versa, for lowering the index.

The process and the problems solved by it is limited to a chocolate tempering process by which the major part is not flowing through the crystallization stage but is instead by-passed. Consequently, accurate control of the different chocolate temperatures in relation to each other are of outmost importance for controlling the by-pass process with success.

US6105489 discloses an apparatus for continuous tempering of chocolate mass having a primary cooling section C1, a secondary cooling section C2 and a reheating section H. During tempering a computer controls, that the water temperature of the cooling circuit 9 of the primary cooling section C1 is maintained higher than the water temperature of the cooling circuit 10 of the secondary cooling section C2. Thereby, it can be ensured, that during cooling of the mass in the first section C1 uncontrolled creation of crystals is excluded, so that creation of crystals in the mass is limited to the secondary section C2 in a precise and fully controlled manner.

The problem to be solved by the present invention is to provide a process, apparatus and computer program which is able to attain and provide the correct settings of a continuous tempering process in a production such as a chocolate production in a fast and uncomplicated manner. It means that alterations of few important production parameters can be done by a person which is unskilled in the complicated theory of chocolate behavior during tempering. An ordered adjustment given in by the personnel at a simple scale of numbers will then automatically be taken over by the process to achieve the desired result without further efforts.

The inventive process is characterized in,
that the crystallization amount to be achieved is adjusted as a crystal control value on a scale on the touch-screen of the HMI-unit,
the HMI-unit calculating and transmitting a set-point value for the water temperature of the crystallization cooling stage,
where after the HMI-unit continuedly repeats;
receiving from a mass outlet temperature PID-sensor an outlet temperature value reflecting the actual mass outlet temperature,
calculating deviation of the actual outlet temperature value from the set-point value for the mass outlet temperature, and
is calculating and transmitting a set-point value for the water temperature of the pre-cooling stage.

The inventive apparatus has a HMI-unit with a touch-screen and a computer adapted to execute the steps of the inventive process,
an inlet mass channel with a mass pump,
a pre-cooling stage having a pre-cooling water system adapted to communicate with the HMI-unit,
an intermediary mass channel connecting the pre-cooling stage with a crystallization cooling stage and in which intermediary mass channel is arranged a mass pre-cooling temperature PID-sensor adapted to communicate with the HMI-unit,
a crystallization cooling stage having a crystallization cooling water system adapted to communicate with the HMI-unit,
an outlet channel for the tempered mass,
and in which outlet channel is arranged a mass outlet temperature PID-sensor.

With the inventive process and apparatus is obtained, that the personnel only need to give in the desired set-point value for the mass outlet temperature and adjust the crystallization amount to be achieved as a crystal control value on a scale on the touch-screen. Thereafter, the process, apparatus and computer program of the HMI automatically regulates in the crystallization amount to be obtained in the ready tempered chocolate mass in accordance with the crystal control value given in at the touch-screen.

This severely simplifies the start-up and continuous process control of the tempering process for the manufacturer personnel.

During a production the outlet temperature of the mass is mostly maintained constant when the chocolate product is satisfactory.

However, if the manufacturer during a given production needs a higher or lower crystallization amount in the tempered chocolate mass, for example if he alters the production from enrobing with a low content of crystals to chocolate moulding requiring a higher content, the crystal control value is raised at the touch screen.

The HMI-unit is then calculating and transmitting an lower set-point value for the water temperature of the crystallization cooling stage,
where after the HMI-unit continuedly repeats;
receiving from a mass outlet temperature PID-sensor a lower outlet temperature value reflecting the slightly lower actual mass outlet temperature,
calculating deviation of the actual outlet temperature value from the set-point value for the mass outlet temperature, and
is calculating and transmitting a slightly higher set-point value for the water temperature of the pre-cooling stage then to be raised slightly.

The term slightly raised temperature is to be interpreted as a deviation in the field of 0-1°C, typically in incremental of 0,1°C.

After a few minutes the program of the HMI has repeated the inventive steps of the process and the new higher crystallization amount is achieved.

When the set-point value for the water temperature of the pre-cooling stage = the set-point value for the mass outlet temperature + (the actual outlet temperature value ÷ 12,5) in the computer program, the regulating in of the HMI, after the crystallization amount has been adjusted, is fast and reliable.

When the actual outlet temperature value is between -100 and +100 and the set-point value for the water temperature of the pre-cooling stage is within +/-8°C of the set-point value for the mass outlet temperature of the computer program, the program is adapted to perform extremely accurate in temperatures when it is applied for the apparatus having a plate heat exchanger as the pre-cooling stage.

When the computer program has the instructions that the
set-point value for the water temperature of the crystallization cooling stage = 25 - (the crystal control value on a scale on the touch-screen of the HMI-unit · 0,5) accuracy in the full span from low to high content of crystals is achieved.

The invention is explained further below under reference to a preferred embodiments as well as the drawing, in which

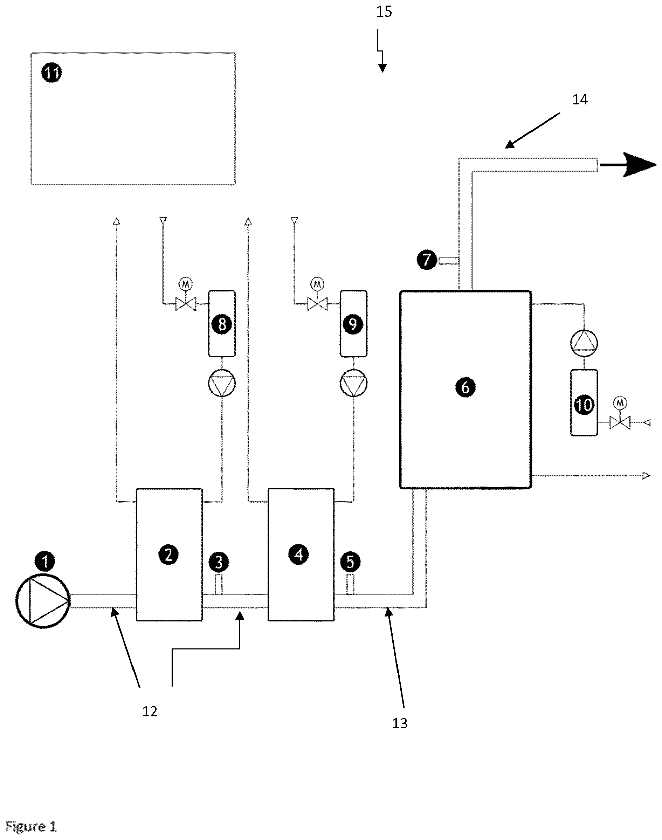

fig. 1 is a schematic view of an inventive tempering apparatus comprising a HMI with a computer program adapted to perform the steps of the inventive process.

The apparatus 15 for continuous tempering of chocolate mass is disclosed schematically in diagram form as such apparatuses are commonly known in their outer appearance. The outer appearance of the inventive apparatus is for example disclosed in EP3269250A1.

The apparatus 15 has a mass pump 1, which pumps the chocolate mass continuously into an inlet mass channel 12 connected to a pre-treat heat exchanger 2. In the extension of the channel 12 at the outlet from heat exchanger 2 is arranged a pre-treat chocolate temperature sensor 3. A pre-treat water system 8 controls the heat exchange of the pre-treat exchanger 2.

The pre-treat heat exchanger 2 is an optional possibility and is as such not part of the present invention. Its purpose is to control the temperature of the chocolate mass at the temperature sensor 3 to a high level at 40-50°C so that the manufacturer is ensured that the chocolate mass feed continuously further into the inventive apparatus is free from crystals when the actual tempering begins in the subsequent pre-cooling stage 4.

The extension of the inlet mass channel 12 leads the mass into the pre-cooling stage 4 having a pre-cooling water system 9. In the channel 13 further connecting the pre-cooling stage 4 with the crystallization stage 6 is arranged a mass pre-cooling temperature PID-sensor 5. The pre-cooling stage 4 is advantageously arranged as a plate-heat exchanger.

The crystallization stage 6 is controlled by a crystallization cooling water system 10. In an outlet channel 14 for the crystallized and tempered mass is arranged a mass outlet temperature PID-sensor 7.

The pre-cooling water system 9, the crystallization cooling water system 10 as well as the mass pre-cooling temperature PID-sensor 5 and the mass outlet temperature PID-sensor 7 are all adapted to communicate with a HMI-unit 11 of the apparatus 15. The HMI-unit 11 has a touch-screen and an internal computer which are both not disclosed as they are common in the field of process apparatus.

In the computer of the HMI-Unit 11 is stored a computer program which controls the process performed by the apparatus 15.

The computer program has the instructions that the set-point value for the water temperature of the pre-cooling stage = the set-point value for the mass outlet temperature + (the actual outlet temperature value ÷ 12,5).

It also has the instructions that the actual outlet temperature value is between -100 and +100 and the set-point value for the water temperature of the pre-cooling stage is within +/- 8°C of the set-point value for the mass outlet temperature.

Furthermore, the computer program is comprising the instructions that the set-point value for the water temperature of the crystallization cooling stage = 25 - (the crystal control value on a scale on the touch-screen of the HMI-unit · 0,5).

At the beginning of a tempering process the personnel only need to give in the desired set-point value for the mass outlet temperature at the touch-screen of the HMI-Unit 11.

Thereafter, the crystal control value is regulated in on a scale from 1-20 on the touch-screen. The computer program of the HMI-unit 11 then automatically regulates in the crystallization amount to be obtained in the ready tempered chocolate mass. The start-up and continuous process control of the tempering process is very simple to make for the manufacturer's personnel.

During a production the outlet temperature of the mass is mostly maintained constant when the chocolate product is satisfactory.

On a trial production run of tempering dark chocolate the outlet set-point temperature is given in as 29,0°C and the crystal control value is set to 7 at the touch screen. The HMI-Unit 11 then calculates a set-point for the crystallization cooling water system 10 to 21,5°C and the set-point for the pre-cooling water system 9 to 26,3°C. The interaction of the PID-sensor 5 and the HMI-Unit 11 then controls the pre-cooled chocolate temperature to 30,0°C. The obtained temper index is then 2,4. The size of the temper index is measured with a tempermeter testing the tempered chocolate mass and express the content of the actual crystallization achieved in the mass. A temper index of 2,4 reveals an "undertempered" mass having a crystal content being to low.

On a first production run maintaining the chocolate outlet temperature at 29,0°C the crystal control value is then raised to 10. The HMI-Unit lowers the set-point temperature of the crystallization water to 20,0°C to produce more crystals in the mass when flowing through the crystallization stage 6. The computer program calculates the pre-cooling water set-point to 27,1°C consequently resulting in a temper index of 3,5 in the tempered chocolate mass. The crystal content is then raised and the chocolate mass is satisfactory to be used in the factory enrober, which require the mass to be "thin" and highly "liquid" for the mass not to thicken up and solidify in the continued recycling of the remaining mass of the enrober curtain.

On a second production run following the first run with the same dark chocolate mass the outlet temperature is maintained at 29,0°C and the crystal control value is raised to 14. The HMI-Unit lowers the set-point temperature of the crystallization water to 18,0°C to produce more crystals in the mass when flowing through the crystallization stage 6. The computer program calculates the pre-cooling water set-point to 27,6°C consequently resulting in a temper index of 4,3 in the tempered chocolate mass. The crystal content is then raised and the chocolate mass is satisfactory to be used in the factory moulding line, which require the mass to have an average content of crystals and average "liquidity" for many moulding purposes.

On a third production run following the second run with the same dark chocolate mass the outlet temperature is maintained at 29,0°C and the crystal control value is raised to 18. The HMI-Unit lowers the set-point temperature of the crystallization water to 16,0°C to produce even more crystals in the mass when flowing through the crystallization stage 6. The computer program calculates the pre-cooling water set-point to 28,2°C consequently resulting in a temper index of 5,8 in the tempered chocolate mass. The crystal content is then raised even further, and the chocolate mass is in a so-called "over-tempered" condition due to a high content of crystals and a "thicker" condition. However, such mass is satisfactory to be used in the factory cold-pressing line, which require the mass to possess minor liquidity.

In general, if the manufacturer during a given production needs a higher or lower crystallization amount in the tempered chocolate mass, for example if he alters the production from enrobing with a low content of crystals to chocolate moulding requiring a higher content, the crystal control value is raised at the touch screen.

The HMI-unit is then calculating and transmitting an lower set-point value for the water temperature of the crystallization cooling stage 6, where after the HMI-unit 11 continuedly repeats;
receiving from the mass outlet temperature PID-sensor 7 a lower outlet temperature value reflecting the slightly lower actual mass outlet temperature,
calculating deviation of the actual outlet temperature value from the set-point value for the mass outlet temperature, and is calculating and transmitting a slightly higher set-point value for the water temperature 9 of the pre-cooling stage 4 then to be raised slightly.

Consequently the chocolate mass will be warmer coming out of the pre-cooling heat exchanger 4 thus again remaining at the predetermined outlet temperature given in at the touch screen for the outlet PID-sensor 7. The inventive process, apparatus and computer program regulates in the tempering process fully automatically, so that it can be surveyed by personnel not having skills in chocolate tempering.
1. Mass pump
2. Pre-treat heat exchanger
3. Pre-treat chocolate temperature sensor
4. Pre-cooling stage
5. Mass pre-cooling temperature PID-sensor
6. Crystallization stage
7. Mass outlet temperature PID-sensor
8. Pre-treat water system
9. Pre-cooling water system
10. Crystallization cooling water system
11. HMI
12. Inlet mass channel
13. Intermediary mass channel
14. Outlet channel for tempered mass
15. Apparatus for tempering of chocolate mass

## Claims

1. Process for controlling continuous tempering of a fat-containing, crystallizable mass, such as chocolate mass, nougat mass or creme mass being pumped continuously through a pre-cooling stage (4) in which it is cooled to a mass pre-cooling temperature above the crystal-creation temperature of the particular mass, where after the mass is pumped through a crystallization cooling stage (6) in which the mass is cooled so that crystals are created in the mass thereby having a mass outlet temperature,
entering a set-point value for the mass outlet temperature at the touch-screen of a HMI-unit (11),
adjusting the crystallization amount to be achieved,
wherein the crystallization amount to be achieved is adjusted as a crystal control value on a scale on the touch-screen of the HMI-unit (11),
the HMI-unit (11) calculates and transmits a set-point value for the water temperature of the crystallization cooling stage (6),
**characterized in that** afterwards the HMI-unit (11) continuedly repeats:
receiving from a mass outlet temperature PID-sensor (7) an outlet temperature value reflecting the actual mass outlet temperature,
calculating deviation of the actual outlet temperature value from the set-point value for the mass outlet temperature, and
calculating and transmitting a set-point value for the water temperature of the pre-cooling stage (4).

2. Apparatus (15) for continuous tempering of a fat-containing, crystallizable mass, such as chocolate mass, nougat mass or creme mass having
a HMI-unit (11) with a computer adapted to execute the steps of the process of claim 1,
an inlet mass channel (12) with a mass pump (1),
a pre-cooling stage (4) having a pre-cooling water system (9) adapted to communicate with the HMI-unit (11),
an intermediary mass channel (13) connecting the pre-cooling stage (4) with a crystallization cooling stage (6) and in which intermediary mass channel (13) is arranged a mass pre-cooling temperature PID-sensor (5) adapted to communicate with the HMI-unit (11),
a crystallization cooling stage (6) having a crystallization cooling water system (10) adapted to communicate with the HMI-unit (11),
an outlet channel (14) for the tempered mass,
and in which outlet channel (14) is arranged a mass outlet temperature PID-sensor (7).

3. A computer program comprising instructions to cause the HMI-unit (11) of claim 2 to execute the steps of claim 1.

4. Computer program according to claim 3 comprising the instructions that the set-point value for the water temperature of the pre-cooling stage (4) = the set-point value for the mass outlet temperature + (the actual outlet temperature value ÷ 12,5).

5. Computer program according to claim 4 comprising the instructions that the actual outlet temperature value is between -100 and +100 and
the set-point value for the water temperature of the pre-cooling stage (4) is within +/- 8°C of the set-point value for the mass outlet temperature.

6. Computer program according to claim 4 comprising the instructions that the set-point value for the water temperature of the crystallization cooling stage (6) = 25 - (the crystal control value on a scale on the touch-screen of the HMI-unit · 0,5).

## Patentansprüche

1. Verfahren zum Steuern der kontinuierlichen Temperierung einer fetthaltigen, kristallisierbaren Masse, wie beispielsweise Schokoladenmasse, Nougatmasse oder Crememasse, die kontinuierlich durch eine Vorkühlstufe (4) gepumpt wird, in der sie auf eine Massenvorkühltemperatur oberhalb der Kristallbildungstemperatur der jeweiligen Masse abgekühlt wird, woraufhin die Masse durch eine Kristallisationskühlstufe (6) gepumpt wird, in der die Masse so abgekühlt wird, dass sich in der Masse Kristalle bilden, die eine Massenauslasstemperatur aufweisen, Eingeben eines Sollwerts für die Massenauslasstemperatur auf dem Touchscreen eines HMI-Geräts (11),
Einstellen der zu erreichenden Kristallisationsmenge, wobei
die zu erreichende Kristallisationsmenge als Kristallsteuerungswert auf einer Skala auf dem Touchscreen des HMI-Geräts (11) eingestellt wird,
das HMI-Gerät (11) einen Sollwert für die Wassertemperatur der Kristallisationskühlstufe (6) berechnet und übermittelt,
**dadurch gekennzeichnet, dass** danach das HMI-Gerät (11) fortlaufend Folgendes wiederholt:
Empfangen eines die tatsächliche Massenauslasstemperatur widerspiegelnden Auslasstemperaturwerts aus einem Massenauslasstemperatur-PID-Sensor (7),
Berechnen der Abweichung des tatsächlichen Auslasstemperaturwerts aus dem Sollwert für die Massenauslasstemperatur, und
Berechnen und Übermitteln eines Sollwerts für die Wassertemperatur der Vorkühlstufe (4).

2. Vorrichtung (15) zum kontinuierlichen Temperieren einer fetthaltigen, kristallisierbaren Masse, wie beispielsweise Schokoladenmasse, Nougatmasse oder Crememasse, die Folgendes aufweist:
ein HMI-Gerät (11) mit einem Computer, der dazu ausgelegt ist, die Schritte des Verfahrens gemäß Anspruch 1 auszuführen,
einen Einlassmassenkanal (12) mit einer Massenpumpe (1),
eine Vorkühlstufe (4) mit einem Vorkühlwassersystem (9), das zur Kommunikation mit dem HMI-Gerät (11) ausgelegt ist,
einen zwischenliegenden Massenkanal (13), der die Vorkühlstufe (4) mit einer Kristallisationskühlstufe (6) verbindet, wobei in dem zwischenliegenden Massenkanal (13) ein Temperatur-PID-Sensor (5) für die Massenvorkühlung angeordnet ist, der zur Kommunikation mit dem HMI-Gerät (11) ausgelegt ist,
eine Kristallisationskühlstufe (6) mit einem Kristallisationskühlwassersystem (10), das zur Kommunikation mit dem HMI-Gerät (11) ausgelegt ist,
einen Auslasskanal (14) für die temperierte Masse,
wobei in dem Auslasskanal (14) ein Massenauslasstemperatur-PID-Sensor (7) angeordnet ist.

3. Computerprogramm, umfassend Anweisungen, um das HMI-Gerät (11) gemäß Anspruch 2 zu veranlassen, die Schritte gemäß Anspruch 1 auszuführen.

4. Computerprogramm gemäß Anspruch 3, umfassend die Anweisung, dass der Sollwert für die Wassertemperatur der Vorkühlstufe (4) = dem Sollwert für die Massenauslasstemperatur + (dem Istwert der Auslasstemperatur : 12,5) entspricht.

5. Computerprogramm gemäß Anspruch 4, umfassend die Anweisung, dass der Istwert der Auslasstemperatur zwischen -100 und +100 liegt und der Sollwert für die Wassertemperatur der Vorkühlstufe (4) innerhalb von +/-8 °C des Sollwerts für die Massenauslasstemperatur liegt.

6. Computerprogramm gemäß Anspruch 4, umfassend die Anweisung, dass der Sollwert für die Wassertemperatur der Kristallisationskühlstufe (6) = 25 - (dem Kristallsteuerungswert auf einer Skala auf dem Touchscreen des HMI-Geräts · 0,5) ist.

## Revendications

1. Procédé pour commander le tempérage continu d'une masse cristallisable, contenant des matières grasses, telle qu'une masse de chocolat, une masse de nougat ou une masse de crème, en train d'être pompée en continu à travers un étage de pré-refroidissement (4) dans lequel elle est refroidie jusqu'à une température de pré-refroidissement de masse supérieure à la température de création de cristaux de la masse particulière, où, après que la masse est pompée à travers un étage de refroidissement de cristallisation (6) dans lequel la masse est refroidie pour que des cristaux soient créés dans la masse ayant ainsi une température de sortie de masse,
l'entrée d'une valeur de point de consigne pour la température de sortie de masse sur l'écran tactile d'une unité HMI (11),
l'ajustement de la quantité de cristallisation destinée à être atteinte,
dans lequel
la quantité de cristallisation destinée à être atteinte est ajustée sous forme de valeur de commande de cristaux sur une échelle sur l'écran tactile de l'unité HMI (11),
l'unité HMI (11) calcule et transmet une valeur de point de consigne pour la température d'eau de l'étage de refroidissement de cristallisation (6),
**caractérisé en ce que**, après cela, l'unité HMI (11) répète en continu :
la réception, à partir d'un capteur PID de température de sortie de masse (7), d'une valeur de température de sortie reflétant la température de sortie de masse réelle,
le calcul d'un écart de la valeur de température de sortie réelle par rapport à la valeur de point de consigne pour la température de sortie de masse, et
le calcul et la transmission d'une valeur de point de consigne pour la température d'eau de l'étage de pré-refroidissement (4).

2. Appareil (15) pour le tempérage continu d'une masse cristallisable, contenant des matières grasses, telle qu'une masse de chocolat, une masse de nougat ou une masse de crème, ayant
une unité HMI (11) avec un ordinateur adapté pour exécuter les étapes du procédé de la revendication 1,
un canal de masse d'entrée (12) avec une pompe de masse (1),
un étage de pré-refroidissement (4) ayant un système d'eau de pré-refroidissement (9) adapté pour communiquer avec l'unité HMI (11),
un canal de masse intermédiaire (13) reliant l'étage de pré-refroidissement (4) à un étage de refroidissement de cristallisation (6) et dans lequel canal de masse intermédiaire (13) est agencé un capteur PID de température de pré-refroidissement de masse (5) adapté pour communiquer avec l'unité HMI (11),
un étage de refroidissement de cristallisation (6) ayant un système d'eau de refroidissement de cristallisation (10) adapté pour communiquer avec l'unité HMI (11),
un canal de sortie (14) pour la masse tempérée,
et dans lequel canal de sortie (14) est agencé une capteur PID de température de sortie de masse (7).

3. Programme d'ordinateur, comprenant des instructions pour faire en sorte que l'unité HMI (11) de la revendication 2 exécute les étapes de la revendication 1.

4. Programme d'ordinateur selon la revendication 3, comprenant les instructions suivantes
la valeur de point de consigne pour la température d'eau de l'étage de pré-refroidissement (4) = la valeur de point de consigne pour la température de sortie de masse + (la valeur de température de sortie réelle ÷ 12,5) .

5. Programme d'ordinateur selon la revendication 4, comprenant les instructions suivantes
la valeur de température de sortie réelle est entre -100 et +100, et
la valeur de point de consigne pour la température d'eau de l'étage de pré-refroidissement (4) est au sein de +/-8°C de la valeur de point de consigne pour la température de sortie de masse.

6. Programme d'ordinateur selon la revendication 4, comprenant the instructions suivantes
la valeur de point de consigne pour la température d'eau de l'étage de refroidissement de cristallisation (6) = 25 - (la valeur de commande de cristaux sur une échelle sur l'écran tactile de l'unité HMI · 0,5).
